# EUROPEAN PATENT APPLICATION

(11) **EP 3 244 618 A1**
(43) Date of publication of application: **15.11.2017**
(21) Application number: 17167283.5
(22) Date of filing: 20.04.2017
(51) Int. Cl.: H04N 21/214, H04N 21/41, H04N 21/414, H04N 21/426, H04N 21/433, H04N 21/6543, H04N 21/472, H04N 7/18, H04N 7/22, H04L 12/28, H04L 29/08, B64D 11/00, H04N 21/4363, H04N 21/8547, H04N 21/43, H04N 9/31

(54) **DISTRIBUTED DIGITAL PROJECTION SYSTEM FOR A VEHICLE**

(30) Priority: 12.05.2016 US 201615153241
(71) Applicant: The Boeing Company, Chicago, IL 60606-1596 (US)
(72) Inventor: Fullerton, James A., Chicago, 60606-1596 (US); Dame, Stephen G., Chicago, 60606-1596 (US); Ibrahim, Yakentim M., Chicago, 60606-1596 (US)
(74) Representative: Witte, Weller & Partner Patentanwälte mbB

(57) **Abstract**

A distributed digital projection system is disclosed which includes a plurality of smart projectors coupled to a head end server computer via a network. Each smart projector has a first network interface coupled to the network. Each smart projector is configured to receive commands and digital content, to process the received commands, and to convert the received digital content into a projection light signal for output. Each smart projector may include a second network interface to allow a daisy-chain network configuration. The head end server computer is configured to issue commands and to forward digital content to each of the at least one smart projectors, the commands specifying at least a time for display of the digital content. The digital content is stored on either network attached storage device coupled to the network or on a storage device directly coupled to or integrated with the head end server computer.

## Description

### BACKGROUND

This disclosure relates generally to a distributed digital projection system for use in a vehicle such as an aircraft.

Projection systems which use multiple projectors to cover multiple surfaces typically are centralized with a single master computer server having a separate video card for each of the projectors. In such a system, each of the projectors is coupled to an associated one of the separate video cards via a dedicated video cable such as a High-Definition Multimedia Interface (HDMI) cable and all of the control logic (hardware and software) for activating the projectors in this system resides in the master computer server. All of the digital content for display is stored in a memory associated with the master computer server. When a particular projector is selected for output of particular digital content (as a projection light signal) in this system, the master computer server retrieves that digital content from memory and forwards such digital content to the video card associated with that projector, which, in turn, converts the digital content to the proper format for transmission via the HDMI cable to that projector. The projector simply receives and displays such digital content in real time. Although this type of system may operate satisfactorily in a fixed installation, there are certain drawbacks when such a system is installed in a vehicle. For example, the type of computer used to control multiple projectors via multiple video cards is large, uses a significant amount of power and generates a significant amount of heat. In addition, such computers are not easily scalable and have a limited capacity for video cards, requiring additional computers to extend the system beyond the video card capacity of a single computer. Furthermore, the need for a separate video card for each projector requires separate cabling for each projector, adding significant cost and weight to a system having numerous projectors. In addition, typical video cable formats such as HDMI have a limited length range before the signal begins to degrade. Long video cable runs may require signal boosters if the distance from the server to the projector become too great. The large size, high power consumption, excessive heat generation, limited cable lengths and added weight makes such systems unsuitable for use in a vehicle such as a passenger aircraft.

Accordingly, there is a need for a digital projection system for installation in a vehicle such as a passenger aircraft which overcomes the problems recited above.

### SUMMARY

In a first aspect, a distributed digital projection system includes a network, at least one smart projector, and a head end server computer. Each of the at least one smart projectors has a first network interface coupled to the network. Each of the at least one smart projectors is configured to receive commands and digital content via the first network interface, to process the received commands, and to convert the received digital content into a projection light signal for output selectively based on the received commands. The head end server computer is coupled to the network and is configured to issue commands and to forward digital content to each of the at least one smart projectors, the commands specifying at least a time for display of the digital content.

In one further example, a network attached storage device may be coupled to the network and configured to store digital content. The head end server computer may be further configured to issue a command to a particular one of the at least one smart projectors instructing the particular one smart projector to download particular digital content from the network attached storage device. In another further example, a storage device may be coupled directly to the head end server computer and configured to store digital content. In yet another further example, the system may include a plurality of at least three projectors and the head end server computer may be configured to provide commands to a group of at least two projectors to display same or similar digital content at a same point in time. Still further, each of the at least one smart projectors may include a second network interface and may be configured to provide a daisy-chain network arrangement via the first and second network interfaces. Yet further, the distributed digital projection system may be installed within a vehicle having one or more onboard operational systems also coupled to the network, and wherein the head end server computer is configured to coordinate operation of the at least one smart projectors based on status information received from at least one of the onboard operational systems.

In a second aspect, a distributed digital projection system includes a network, a plurality of smart projectors, and a head end server computer. Each of the plurality of smart projectors has a first network interface coupled to the network. Each of the plurality of smart projectors is configured to receive commands and digital content via the first network interface, to process the received commands, and to convert the received digital content into a projection light signal for output selectively based on the received commands. The head end server computer is coupled to the network and is configured to issue commands and to forward digital content to each of the at least one smart projectors, the commands specifying at least a time for display of the digital content.

In one further example, a network attached storage device may be coupled to the network and configured to store digital content. Further, the head end server computer may be configured to issue a command to a particular one of the plurality of smart projectors instructing the particular one smart projector to download particular digital content from the network attached storage device. In another further example, a storage device may be coupled directly to the head end server computer and configured to store digital content. In yet another further example, the system may include a plurality of at least three projectors and the head end server computer may be configured to provide commands to a group of at least two projectors to display same or similar digital content at a same point in time. Still further, each of the plurality of smart projectors may include a second network interface and be configured to provide a daisy-chain network arrangement via the first and second network interfaces. In the daisy-chain network arrangement, a first of the plurality of smart projectors may be coupled directly to the network via the first network interface therein, and a second of the plurality of smart projectors may be coupled to the network by connecting a network cable from the first network interface therein to the second network interface of the first of the plurality of smart projectors. The distributed digital projection system may be installed within a vehicle having one or more onboard operational systems also coupled to the network, and the head end server computer may be configured to coordinate operation of the plurality of smart projectors based on status information received from at least one of the onboard operational systems.

In a third aspect, a smart projector for a distributed digital projection system has a front end portion and a rear end portion. The front end portion has an input for coupling to a network. The front end portion is configured to receive commands and digital content from a head end server computer via the network, to convert the received digital content into a high resolution video signal selectively based on the received commands, and to provide the high resolution video signal on an output. The back end portion is coupled to the output of the front end portion to receive the high resolution video signal therefrom. The back end portion is configured to convert the high resolution video signal into a projection light signal for output.

In one further example, the front end portion may include a graphic processing unit for converting digital content into a high resolution video signal. In another further example, the input of the front end portion may be a network interface. In yet another further example, the input of the front end portion may include a first network interface and a second network interface, and the front end portion is configured to provide a daisy-chain network arrangement via the first and second network interfaces. In a still further example, the front end portion may include a media storage unit for storing digital content.

The features, functions, and advantages that have been discussed can be achieved independently in various examples or may be combined in yet other examples, further details of which can be seen with reference to the following description and drawings.

### BRIEF DESCRIPTION OF THE DRAWINGS

The following detailed description, given by way of example and not intended to limit the present disclosure solely thereto, will best be understood in conjunction with the accompanying drawings in which:
FIG. 1 is a block diagram of a distributed digital projector system according to a first example of the present disclosure;
FIG. 2 is a block diagram of a distributed digital projector system according to a second example of the present disclosure;
FIG. 3 is a block diagram of an enhanced digital projector for use in the distributed digital projector system of the present disclosure; and
FIG. 4 is a block diagram of a front-end interface for the enhanced digital projector of FIG. 3 according to an example of the present disclosure.

### DETAILED DESCRIPTION

In the present disclosure, like reference numbers refer to like elements throughout the drawings, which illustrate various exemplary examples of the present disclosure.

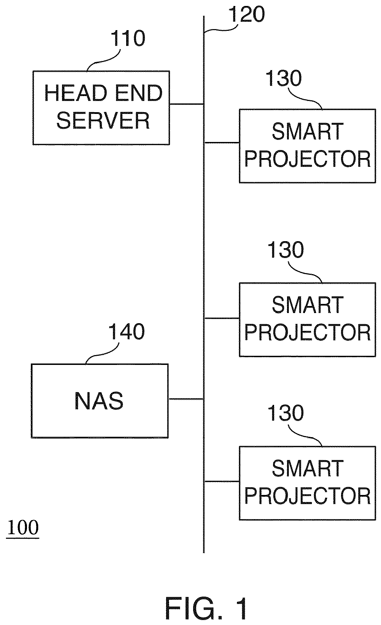

Referring now to the drawings, and in particular to FIG. 1, an example of a distributed digital projector system 100 for installation in a vehicle according to the present disclosure is shown. In this system, a head end server (computer) 110 is coupled to a plurality of smart projectors 130 via a network 120. Each of the smart projectors 130 is installed in separate areas of the vehicle (e.g., within the cabin in a passenger aircraft) and is configured to output a projection light signal based on locally stored digital content onto a predetermined target surface, e.g., a white screen positioned for passenger viewing (for display of video programs), a ceiling of the vehicle (for display of moving images to enhance the ambiance of the passenger cabin) or a white screen adjacent to functional equipment (for status display related to such functional equipment). The phrase "digital content" as used herein refers to video programs or other video signal-based content stored in a digital format. Although three smart projectors 130 are shown in FIG. 1, distributed digital projector system 100 may include any number of such smart projectors due to the distributed nature of the system. Head end server 110 issues commands to control the operation of each of the smart projectors 130 but does not require separate video cards for each projector. Head end server 110 is configured to control the operation of each of the digital projectors 130 by transmitting commands and/or digital content via network 120. Since head end server 110 does not include a plurality of video cards, head end server 110 may be smaller and much more efficient than conventional systems which rely on a head end computer with multiple video cards installed therein. In addition, there is no limit to the number of smart projectors 130 which may be coupled to head end server 110 (via network 120) in distributed digital projection system 100 in contrast to conventional projection systems which are limited by the video card capacity of the head end computer and the distance between the server computer and the projector. Each smart projector 130 includes front end circuitry which performs, among other tasks, the processing previously performed by the video card in the master computer server. Such front end circuitry receives and stores digital content via network 120 and then processes the digital content for output as an output projection light signal based on commands issued by the head end server 110. The digital content for output by the one or more of the plurality of smart projectors 130 may be stored on a network attached storage (NAS) device 140 that is also coupled to the network 120. In the alternative, the digital content may be stored on a storage device integrated within or coupled directly to head end server 110.

The distributed digital projection system 100 shown in FIG. 1 includes a head end server 110 which is configured to manage the digital content provided to each of the smart projectors 130, to communicate with other onboard operational systems within the vehicle to coordinate the operation of the smart projectors 130 based on status information provided from such other onboard operational systems (e.g., take-off, landing, etc.), and to provide commands to each of the smart projectors 130 to display specific digital content at predetermined times or in predetermined sequences. In some cases, head end server 110 may be configured to manage a group of projectors 130 (consisting of some but not all of the total number of projectors) to display the same or similar content at the same time. For example, a group of projectors 130 may be mounted to display content on a ceiling within an aircraft, and head end server 110 may provide commands to each projector 130 in such group to display starry sky scenes during a particular part of a flight. Distributed digital projection system 100 provides an efficient scalable system because once the head end server 110 and network 120 are in place in the vehicle, the total number of smart projectors 130 to be installed in the vehicle can be arbitrarily selected by a customer. As a result, when distributed digital projection system 100 is installed in a passenger aircraft, this scalability adds great flexibility in final cabin arrangements with minimal effect on the overall system design.

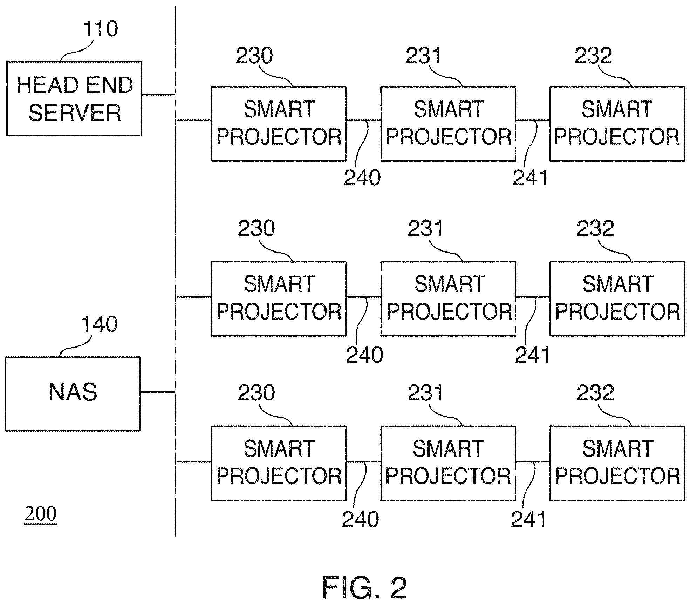

Referring now to FIG. 2, an alternative example of a distributed digital projection system 200 is shown in which each smart projector 230, 231, 232 is configured to include two network ports to allow a daisy-chain arrangement to be implemented as shown. In particular, smart projectors 230 are each coupled to network 120 via one of the network connections and to another smart projector 231 via the other of the network connections and a separate network cable 240. Similarly, each smart projector 231 may be coupled to a further smart projector via the second network connection and a separate network cable 241. In this manner, distributed digital projection system 200 may be installed in a vehicle such as a passenger aircraft having a main network 120 installed and with smart projectors 231, 232 positioned in areas where smart projector 230 is located much closer than the nearest network connection to network 120 by adding a smaller length of additional cabling for cables 240, 241 than would be required if each smart projector 231, 232 was coupled by network cabling to the same network connection used by smart projector 230.

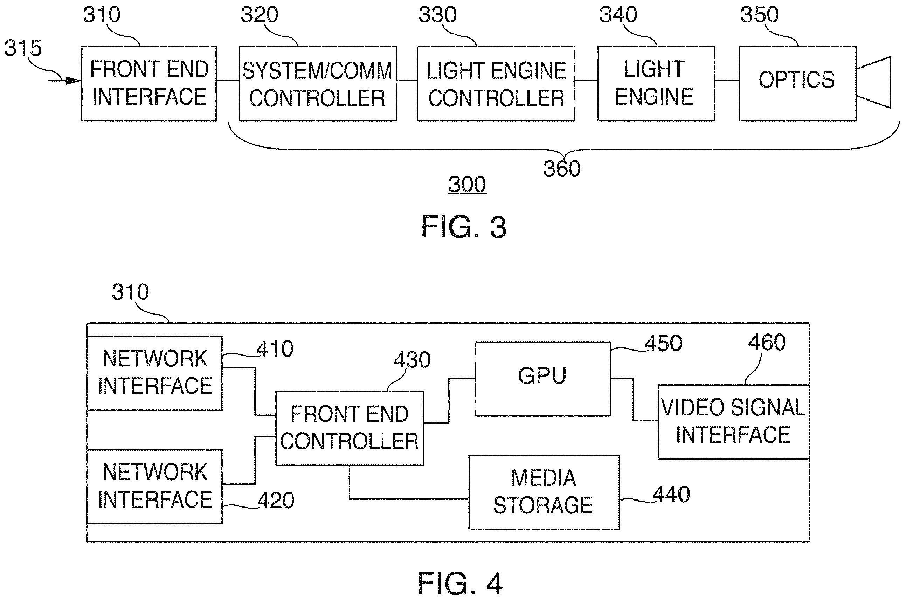

Referring now to FIG. 3, each smart projector 300 (corresponding to smart projector 130 in FIG. 1 and smart projectors 230, 231, 232 in FIG. 2) includes a front end portion 310 having an input 315 for coupling to a network. Front end portion 310 is configured to communicate with the head end controller 110 via the network, to receive digital content for output, to store such digital video content, and to convert such digital content to an appropriate signal type (e.g., a high resolution video signal of the type received via an HDMI cable). Front end portion 310 is coupled, in turn, to the system and communication controller 320, which receives the high resolution video signal, processes such signal and forwards the processed signal to light engine controller 330. Light engine controller 330 further processes the received signal and forwards appropriate signals to light engine 340 to generate a light signal for output as a projection light signal via optics 350. The operation of system and communication controller 320, light engine controller 330, light engine 340 and optics 350 comprise a back end portion 360 of smart projector 300. The back end portion 360 operates conventionally and no additional description of the elements 320, 330, 340, 350 is provided herein.

Referring to FIG. 4, front end portion 310 is shown having a two network interfaces 410 and 420. As discussed above with respect to FIG. 2, the second network interface 420 is optional and when included allows a daisy-chain network type configuration of the smart projectors 230, 231, 232 (FIG. 2). Each network interface 410, 420 is coupled to a front end controller 430, which is also coupled to media storage memory 440 and to a graphics processing unit (GPU) 450. GPU 450 is in turn coupled to a video signal interface 460. Video signal interface 460 is the output of front end portion 310 and is coupled to the conventional portions of smart projector 300. Front end controller 430 is configured to receive and process communications via network interface 410. Such communications may include digital content and commands from the head end server 110 related to both the operation of smart projector 300 (e.g., what digital content with local media storage 440 to display and when to display such digital content) and to acquiring new digital content (e.g., to download new digital content from NAS 140). Front end controller 430 can thus, based on commands from head end server 110, receive digital content (from local media storage 440 or NAS 140 shown in FIGS. 1 and 2), store the digital content in the local media storage memory 440, and, at a predetermined time, forward such digital content to GPU 450 for processing and output via video signal interface 460. Thereafter, the signal output via video signal interface 460 is converted to a projection light signal as discussed with respect to FIG. 3. By storing and processing the digital content within smart projector 300, latency and bandwidth networking problems are reduced or eliminated. In particular, by transferring digital content to smart projector 300 during low activity time periods (i.e., non-flight time periods), the only network data flow during high activity time periods (e.g., flight time periods) will be commands to control display of digital content already present in smart projector 300.

Further, the disclosure comprises examples according to the following clauses:
Clause 1. A distributed digital projection system (100), comprising:
   a network (120);
   at least one smart projector (130), each of the at least one smart projectors (130) having a first network interface (410) coupled to the network (120) and configured to receive commands and digital content via the first network interface (410), to process the received commands, and to convert the received digital content into a projection light signal for output selectively based on the received commands; and
   a head end server computer (110) coupled to the network (120) and configured to issue commands and to forward digital content to each of the at least one smart projectors (130), the commands specifying at least a time for display of the digital content.
Clause 2. The distributed digital projection system (100) of clause 1, further comprising a network attached storage device (140) coupled to the network (120) and configured to store digital content.
Clause 3. The distributed digital projection system (100) of clause 2, wherein the head end server computer (110) is configured to issue a command to a particular one of the at least one smart projectors (130) instructing the particular one smart projector (130) to download particular digital content from the network attached storage device (140).
Clause 4. The distributed digital projection system (100) of any preceding clause, in particular clause 1, further comprising a storage device coupled directly to the head end server computer and configured to store digital content.
Clause 5. The distributed digital projection system (100, 200) of any preceding clause, in particular clause 1, further comprising a plurality of at least three smart projectors (230, 231, 232); and
   wherein the head end server computer (110) is configured to provide commands to a group of at least two smart projectors to display same or similar digital content at a same point in time.
Clause 6. The distributed digital projection system (100) of any preceding clause, in particular clause 1, wherein each of the at least one smart projectors (130) includes a second network interface (420) and is configured to provide a daisy-chain network arrangement via the first and second network interfaces.
Clause 7. The distributed digital projection system (100) of any preceding clause, in particular clause 1, wherein the distributed digital projection system (100) is installed within a vehicle having one or more onboard operational systems also coupled to the network, and wherein the head end server computer (110) is configured to coordinate operation of the at least one smart projectors based on status information received from at least one of the onboard operational systems.
Clause 8. A distributed digital projection system (200), comprising:
   a network (120);
   a plurality of smart projectors (230, 231), each of the plurality of smart projectors (230, 231) having a first network interface (410) coupled to the network (120) and configured to receive commands and digital content via the first network interface (410), to process the received commands, and to convert the received digital content into a projection light signal for output selectively based on the received commands; and
   a head end server computer (110) coupled to the network (120) and configured to issue commands and to forward digital content to each of the at least one smart projectors, the commands specifying at least a time for display of the digital content.
Clause 9. The distributed digital projection system (200) of clause 8 further comprising a network attached storage device (140) coupled to the network (120) and configured to store digital content.
Clause 10. The distributed digital projection system (200) of clause 9, wherein the head end server computer (110) is configured to issue a command to a particular one of the plurality of smart projectors instructing the particular one smart projector to download particular digital content from the network attached storage device.
Clause 11. The distributed digital projection system (200) of any preceding clause, in particular clause 8, further comprising a storage device coupled directly to the head end server computer (110) and configured to store digital content.
Clause 12. The distributed digital projection system (200) of any preceding clause, in particular clause 8, further comprising a plurality of at least three smart projectors (230, 231, 232); and
   wherein the head end server computer (110) is configured to provide commands to a group of at least two smart projectors to display same or similar digital content at a same point in time.
Clause 13. The distributed digital projection system (200) of any preceding clause, in particular clause 8, wherein each of the plurality of smart projectors includes a second network interface (420) and is configured to provide a daisy-chain network arrangement via the first and second network interfaces (410, 420).
Clause 14. The distributed digital projection system (200) of clause 13, wherein a first of the plurality of smart projectors is coupled directly to the network (120) via the first network interface (410) therein, and a second of the plurality of smart projectors is coupled to the network by connecting a network cable from the first network interface (410) therein to the second network interface (420) of the first of the plurality of smart projectors.
Clause 15. The distributed digital projection system (200) of any preceding clause, in particular clause 8, wherein the distributed digital projection system (200) is installed within a vehicle having one or more onboard operational systems also coupled to the network, and
   wherein the head end server computer is configured to coordinate operation of the plurality of smart projectors based on status information received from at least one of the onboard operational systems.
Clause 16. A smart projector (300) for a distributed digital projection system, comprising:
   a front end portion (310) having an input for coupling to a network and configured to receive commands and digital content from a head end server computer (110) via the network, to convert the received digital content into a high resolution video signal selectively based on the received commands, and to provide the high resolution video signal on an output; and
   a back end portion (360) coupled to the output of the front end portion (310) to receive the high resolution video signal therefrom and configured to convert the high resolution video signal into a projection light signal for output.
Clause 17. The smart projector (300) of clause 16, wherein the front end portion (310) comprises a graphic processing unit (450) for converting digital content into a high resolution video signal.
Clause 18. The smart projector (300) of any preceding clause, in particular clause 16,
   wherein the input of the front end portion (310) comprises a network interface.
Clause 19. The smart projector (300) of any preceding clause, in particular clause 16,
   wherein the input of the front end portion (310) comprises a first network interface (410) and a second network interface (420), and wherein the front end portion (310) is configured to provide a daisy-chain network arrangement via the first and second network interfaces (410, 420).
Clause 20. The smart projector (300) of any preceding clause, in particular clause 16,
   wherein the front end portion (310) comprises a media storage unit (440) for storing digital content.

Although the present disclosure has been particularly shown and described with reference to the preferred examples and various aspects thereof, it will be appreciated by those of ordinary skill in the art that various changes and modifications may be made without departing from the spirit and scope of the disclosure. It is intended that the appended claims be interpreted as including the examples described herein, the alternatives mentioned above, and all equivalents thereto.

## Claims

1. A distributed digital projection system (100), comprising:
a network (120);
at least one smart projector (130), each of the at least one smart projectors (130) having a first network interface (410) coupled to the network (120) and configured to receive commands and digital content via the first network interface (410), to process the received commands, and to convert the received digital content into a projection light signal for output selectively based on the received commands; and
a head end server computer (110) coupled to the network (120) and configured to issue commands and to forward digital content to each of the at least one smart projectors (130), the commands specifying at least a time for display of the digital content.

2. The distributed digital projection system (100) of claim 1, further comprising a network attached storage device (140) coupled to the network (120) and configured to store digital content.

3. The distributed digital projection system (100) of claim 2, wherein the head end server computer (110) is configured to issue a command to a particular one of the at least one smart projectors (130) instructing the particular one smart projector (130) to download particular digital content from the network attached storage device (140).

4. The distributed digital projection system (100) of any one of claims 1-3, further comprising a storage device coupled directly to the head end server computer and configured to store digital content.

5. The distributed digital projection system (100, 200) of any one of claims 1-4, further comprising a plurality of at least three smart projectors (230, 231, 232); and
wherein the head end server computer (110) is configured to provide commands to a group of at least two smart projectors to display same or similar digital content at a same point in time.

6. The distributed digital projection system (100) of any one of claims 1-5, wherein each of the at least one smart projectors (130) includes a second network interface (420) and is configured to provide a daisy-chain network arrangement via the first and second network interfaces.

7. The distributed digital projection system (100) of any one of claims 1-6, wherein the distributed digital projection system (100) is installed within a vehicle having one or more onboard operational systems also coupled to the network, and wherein the head end server computer (110) is configured to coordinate operation of the at least one smart projectors based on status information received from at least one of the onboard operational systems.

8. The distributed digital projection system (200) of claim 6, wherein a first of the at least one smart projector is coupled directly to the network (120) via the first network interface (410) therein, and a second of the at least one smart projector is coupled to the network by connecting a network cable from the first network interface (410) therein to the second network interface (420) of the first of the at least one smart projector.

9. A smart projector (300) for a distributed digital projection system, comprising:
a front end portion (310) having an input for coupling to a network and configured to receive commands and digital content from a head end server computer (110) via the network, to convert the received digital content into a high resolution video signal selectively based on the received commands, and to provide the high resolution video signal on an output; and
a back end portion (360) coupled to the output of the front end portion (310) to receive the high resolution video signal therefrom and configured to convert the high resolution video signal into a projection light signal for output.

10. The smart projector (300) of claim 9, wherein the front end portion (310) comprises a graphic processing unit (450) for converting digital content into a high resolution video signal.

11. The smart projector (300) of claim 9 or 10, wherein the input of the front end portion (310) comprises a network interface.

12. The smart projector (300) of any one of claims 9-11, wherein the input of the front end portion (310) comprises a first network interface (410) and a second network interface (420), and
wherein the front end portion (310) is configured to provide a daisy-chain network arrangement via the first and second network interfaces (410, 420).

13. The smart projector (300) of any one of claims 9-12, wherein the front end portion (310) comprises a media storage unit (440) for storing digital content.
